# EUROPÄISCHE PATENTSCHRIFT

(11) **EP 2 261 094 B1**
(45) Veröffentlichungstag und Bekanntmachung des Hinweises auf die Patenterteilung: **01.07.2015**
(21) Anmeldenummer: 10159288.9
(22) Anmeldetag: 08.04.2010
(51) Int. Cl.: B60T 8/36, F16K 31/06

(54) **Ventilpatrone für ein Magnetventil und zugehöriges Magnetventil**
Valve cartridge for a solenoid valve and solenoid valve comprising such a cartridge
Cartouche de vanne pour une électrovanne et électrovanne comprenant une telle cartouche

(30) Priorität: 09.06.2009 DE 102009026853
(43) Veröffentlichungstag der Anmeldung: 15.12.2010
(73) Patentinhaber: Robert Bosch GmbH, 70442 Stuttgart (DE)
(72) Erfinder: Fink, Reinhard, 74321, Bietigheim-Bissingen (DE); Fricke-Schmidt, Joerg, Charleston, 294182906 (US); Bartosch, Hans-Peter, 87561, Oberstdorf (DE)

(56) Entgegenhaltungen:
- WO-A1-01/00473
- WO-A1-2008/155256
- WO-A1-2009/059845
- DE-A1- 10 047 399
- DE-A1-102005 048 880
- DE-A1-102008 014 098
- JP-A- H09 119 553

## Beschreibung

### Stand der Technik

Die Erfindung betrifft eine Ventilpatrone für ein Magnetventil nach der Gattung des unabhängigen Patentanspruchs 1, und ein zugehöriges Magnetventil.

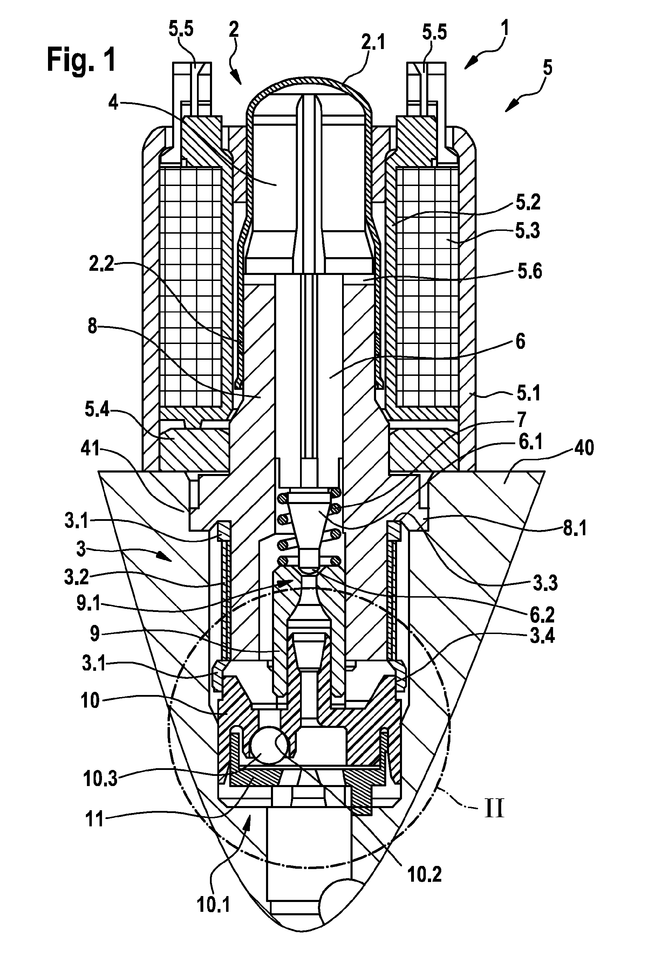

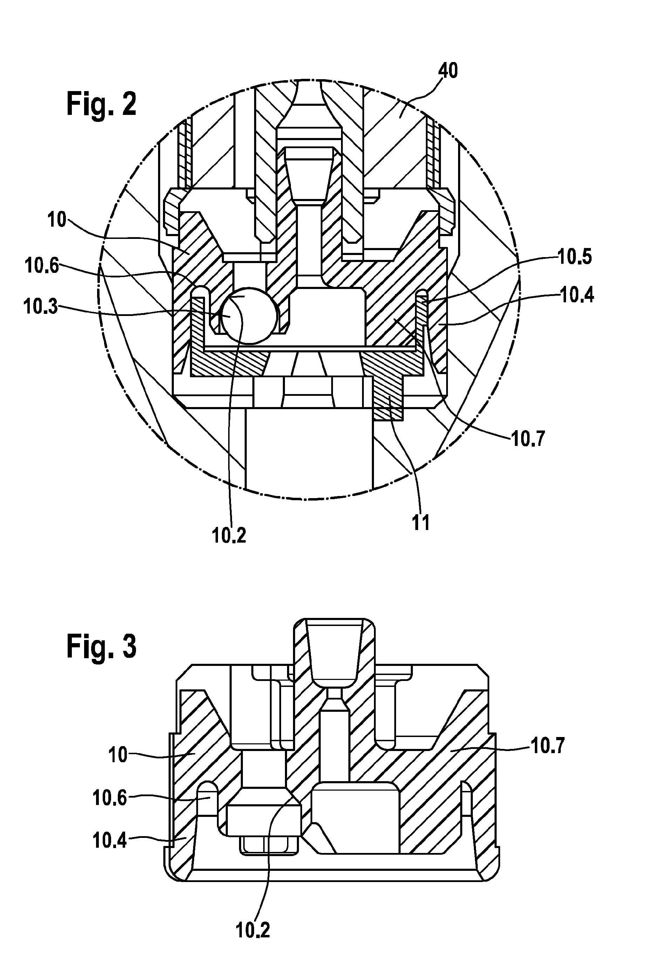

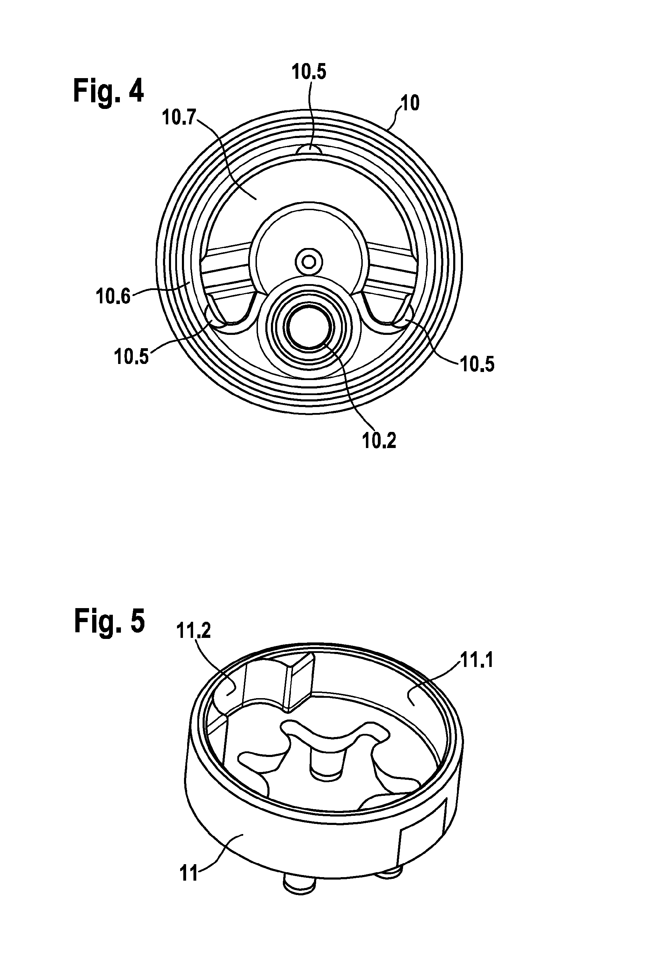

Ein herkömmliches Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, ist in Fig. 1 bis 5 dargestellt. Wie aus Fig. 1 bis 5 ersichtlich ist, umfasst das herkömmliche Magnetventil 1, das beispielsweise als stromlos offenes Regelventil ausgeführt ist, eine Magnetbaugruppe 5 zur Erzeugung eines Magnetflusses, die einen Gehäusemantel 5.1, einen Wicklungsträger 5.2, eine Spulenwicklung 5.3 und eine Abdeckscheibe 5.4 umfasst, und eine Ventilpatrone 2, die eine Kapsel 2.1, einen mit einem ersten Ende in die Kapsel 2.1 eingeschobenen Ventileinsatz 8, einen Magnetanker 4 mit einem Stößel 6 und eine Rückstellfeder 7 umfasst. Bei der Herstellung des herkömmlichen Magnetventils 1 werden die Kapsel 2.1 und der Ventileinsatz 8 der Ventilpatrone 2 durch Pressen aufeinander gefügt, und durch eine Dichtschweißung 2.2 wird die Ventilpatrone 2 hydraulisch gegenüber der Atmosphäre abgedichtet. Zusätzlich nimmt der Ventileinsatz 8 die im hydraulischen System auftretenden Druckkräfte auf und leitet diese über einen Verstemmflansch 8.1 an einen Verstemmbereich 41 eines Fluidblocks 40 weiter.

Die Magnetbaugruppe 5 erzeugt durch eine Bestromung der Spulenwicklung 5.3 über elektrischen Anschlüsse 5.5 eine Magnetkraft, die den längsbeweglichen Magnetanker 4 mit dem Stößel 6, der ein Schließelement 6.1 mit einem Hauptdichtelement 6.2 umfasst, entgegen der Kraft der Rückstellfeder 7 gegen den Ventileinsatz 8 bewegt, wobei der Stößel 6 und die Rückstellfeder 7 in einer Innenbohrung des Ventileinsatzes 8 geführt sind. Der Ventileinsatz 8 leitet den von der Magnetbaugruppe 5 über die Abdeckscheibe 5.4 eingeleiteten Magnetfluss axial über einen Luftspalt 5.6 in Richtung Magnetanker 4. Zudem nimmt der Ventileinsatz 8 an einem zweiten Ende den so genannten Ventilkörper 9 auf, der einen Hauptventilsitz 9.1 umfasst, in welchen das als Dichtkalotte ausgeführte Hauptdichtelement 6.2 dichtend eintaucht, um die Dichtfunktion des Magnetventils 1 umzusetzen.

Wie weiter aus Fig. 1 bis 5 ersichtlich ist, wird an den Ventileinsatz 8 axial ein Ventilunterteil 10 angelegt und abgestützt, das ein exzentrisch zur Ventilhauptachse angeordnetes Rückschlagventil 10.1 mit einem Rückschlagventilsitz 10.2 und einem Rückschlagventilschließelement 10.3 umfasst. Das beispielsweise als Kunststoffeinsatz ausgeführte Ventilunterteil 10 dient zusätzlich zur Abdichtung zum umgebenden Fluidblock 40, zur Abdichtung zum Ventilkörper 9 und zur Aufnahme eines Flachfilters 11 mit einem Einlegesieb und einer Aussparung 11.2 für das Rückschlagventil 10.1. Zudem ist bei dem dargestellten Magnetventil 1 ein komplett gespritzter Ringfilter 3 mit Trägerelement 3.1 und Filterelement 3.2 zum Filtern von Schmutzpartikeln so konstruiert/montiert, dass zugehörige Dichtstellen 3.3, 3.4 direkt zwischen dem Ringfilter 3 und der Magnetventil 1 angeordnet sind, um Bypässe zu vermeiden. Hierbei dichtet der Ringfilter 3 über eine obere Dichtstelle 3.3 axial gegen den Ventileinsatz 8 und über eine untere Dichtstelle 3.4 radial an das angrenzende Bauteil, hier das Ventilunterteil 10 ab. Der Kunststoffflachfilter 11 ist mit dem angrenzenden Ventilunterteil 10 verbunden, um die Montage und das Handling des kompletten Magnetventils 1 in der Produktion zu gewährleisten. Bei der dargestellten Magnetventilkonstruktion taucht dabei ein Ringsteg 11.1 des Flachfilters 11 in eine umlaufende Ringnut 10.6 des Ventilunterteils 10 ein. Der Ringsteg 11.1 wird dabei teilweise oder partiell in der Ringnut 10.6 radial zu einer Verliersicherung verpresst. Diese partiellen Pressungen 10.5 liegen im Bereich einer Dichtlippe 10.4 des Ventilunterteils 10. Die Dichtlippe 10.4 hat die Funktion einer hydraulischen Dichtung im Fluidblock 40. Durch die partiellen Pressungen 10.5 mit dem Flachfilter 11 kann es zu unsymmetrischen Krafteinleitungen in die Dichtlippe 10.4 kommen, wodurch die Dichtfunktion zum Fluidblock 40 beeinträchtigt werden kann. Eine axiale Anlagefläche für den Flachfilter 11 wird im Ventilunterteil 10 durch eine, überhöhte Kontur in Form eines C-Steges 10.7 gewährleistet. Im Bereich des C- Steges 10.7 kommt es dabei zu großen Materialanhäufungen und somit zu großen Wandstärkenunterschieden im Ventilunterteil 10. Das kann zu Fehlstellen (Lunker) und somit zu Festigkeitsproblemen im Bauteil führen. Zudem werden die Bauhöhe des Magnetventils und die Konstruktion des Ventilunterteils von dieser Verbindungsart beeinflusst.

WO 01/00473 A1 offenbart ein Elektromagnetventil, mit einem in einem Ventilgehäuse geführten Ventilstößel, der ein Ventilschließglied aufweist, mit einem dem Ventilschließglied zugewandten Ventilsitz-Aufnahmekörper, der mit dem Ventilgehäuse eine eigenständig handhabbare Unterbaugruppe bildet, sowie mit einem den Ventilstößel betätigenden Magnetanker, der mittels einer am Ventilgehäuse angeordneten Ventilspule elektromagnetisch betätigbar ist. Der Magnetanker als Kaltfließpreßteil ausgebildet und das Ventilgehäuse ist als Tiefziehteil oder Kaltfließpreßteil ausgeführt.

JP H09 119553 A offenbart einen flanschverpressten Einlassfilter. Zur Ausbildung einer Presspassung mit einer Filteraufnahme besitzt das aufnehmende Gehäuse einen Kanal mit vergrößertem Durchmesser.

DE 10 2008 014098 A1 zeigt ein Magnetventil für ein Bremssystem, welches ein in einer Bohrung von einem Modulatorblock untergebrachtes Filterelement, einen an das Filterelement gekoppelten Ventilkern, und weitere Komponenten aufweist. Das Filterelement wird zuerst mit dem Ventilkern verbunden und dann in die Bohrung des Modulatorblocks eingesetzt. Der Stützbereich des Filterelements ist mit einem ersten Filterteil zum Ausfltern von Fremdstoffen aus dem durch einen Einlassdurchgang des Modulatorblocks eingebrachten Öl versehen.

Der Stand der Technik zeigt zudem die WO 2009/059845 A1, DE 10 2005 048880 A1, DE 100 47 399 A1, WO 2008/155256 A1.

### Offenbarung der Erfindung

Die erfindungsgemäße Ventilpatrone für ein Magnetventil mit den Merkmalen des unabhängigen Patentanspruchs 1 hat demgegenüber den Vorteil, dass Haltemittel zur Verbindung eines Flachfilters zum Filtern von Schmutzpartikeln mit dem Ventilunterteil mindestens eine flachfilterseitige Komponente und mindesten eine korrespondierende ventilunterteilseitige Komponente umfassen, welche mindestens eine partielle Klemmverbindung zwischen dem Flachfilter und dem Ventilunterteil herstellen. Die erfindungsgemäße Anbindung des Flachfilters an das Ventilunterteil verringert durch den Entfall eines herkömmlichen C-Steges und/oder den Entfall bzw. die Verringerung einer Ringnuttiefe im Ventilunterteil und den Entfall eines Ringsteges im Flachfilter in vorteilhafter Weise einen axialen Bauraum im unteren Magnetventilbereich. Zudem verhindern die erfindungsgemäßen Haltemittel eine unsymmetrische bzw. punktuelle Krafteinleitungen im Bereich einer Dichtlippe des Ventilunterteils, wodurch eine Dichtfunktion des Ventilunterteils zu einem Fluidblock, in dem das Magnetventil eingebaut ist, verbessert wird.

Der wesentliche Vorteil der erfindungsgemäßen Ventilpatrone besteht darin, dass durch die bauraumoptimierte Umgestaltung des Ventilunterteils die Umsetzung eines Kosten sparenden Magnetventils in Hülsentechnologie ermöglicht wird. Diese Art von Magnetventilen weisen designbedingt größere Axialtoleranzen im unteren Magnetventilbereich auf, die konstruktiv durch die erfindungsgemäßen Haltemittel ausgeglichen werden können. Des Weiteren können Wandstärkenunterschiede im Ventilunterteil bzw. Materialanhäufungen durch die erfindungsgemäßen Haltemittel reduziert werden. Das führt einerseits zu minimierten Schwindungen im Bauteil während des Herstellprozesses, was insbesondere für die Dichtfunktion im Rückschlagventil vorteilhaft ist, und andererseits können festig keitsreduzierende Fehlstellen (Lunker) im Bauteil minimiert werden, wobei Schwindungen herstellungsbedingt in kunststoffgespritzten Bauteilen auftreten können.

Ein erfindungsgemäßes Magnetventil umfasst eine Magnetbaugruppe und eine erfindungsgemäße Ventilpatrone mit einer Kapsel, einem Ventileinsatz, der mit einem ersten Ende in die Kapsel eingeschoben ist und der am anderen Ende einen Ventilkörper mit einem Hauptventilsitz aufnimmt, und einem Ventilunterteil, das sich axial am Ventileinsatz abstützt, wobei innerhalb der Ventilpatrone ein Magnetanker beweglich geführt ist, der von einer von der Magnetbaugruppe erzeugten Magnetkraft bewegbar ist und einen innerhalb des Ventileinsatzes geführten Stößel bewegt, der ein Schließelement mit einem Dichtelement aufweist, wobei das Dichtelement zur Ausführung einer Dichtfunktion dichtend in den Hauptventilsitz des Ventilkörpers eintaucht. Ausführungsformen der Erfindung können grundsätzlich für alle stromlos offenen und stromlos geschlossenen Magnetventile eingesetzt werden.

Durch die in den abhängigen Ansprüchen aufgeführten Maßnahmen und Weiterbildungen sind vorteilhafte Verbesserungen der im unabhängigen Patentanspruch angegebenen Ventilpatrone möglich.

Besonders vorteilhaft ist, dass die mindestens eine flachfilterseitige Komponente als Haltelasche ausgeführt ist, und die mindestens eine ventilunterteilseitige Komponente als Nutsegment ausgeführt ist. Hierbei taucht jeweils eine als Haltelasche ausgeführte flachfilterseitige Komponente in jeweils eine als Nutsegment ausgeführte ventilunterteilseitige Komponente ein. Zudem kann an die mindestens eine als Haltelasche ausgeführte flachfilterseitige Komponente mindestens ein Klemmsteg angeformt werden, welcher in der korrespondierenden als Nutsegment ausgeführten ventilunterteilseitige Komponente radial überpresst wird. So können an die mindestens eine als Haltelasche ausgeführte flachfilterseitige Komponente beispielsweise zwei außen liegende Klemmstege angeformt werden. Zusätzlich kann an die mindestens eine als Haltelasche ausgeführte flachfilterseitige Komponente ein weiterer innen liegender Klemmsteg angeformt werden. Durch die Klemmstege kann die Klemmverbindung zwischen dem Flachfilter und dem Ventilunterteil in vorteilhafter Weise verbessert werden. Des Weiteren können die Anordnungen der Haltelaschen am Flachfilter und der korrespondierenden Nutsegmente am Ventilunterteil zur richtigen Orientierung des Flachfilters im Ventilunterteil genutzt werden.

Die erfindungsgemäße Ventilpatrone weist das Ventilunterteil eine umlaufende Dichtlippe auf, die einen gleich bleibenden umlaufenden Abstand zum geklemmten Flachfilter aufweist. Durch den gleich bleibenden umlaufenden Abstand können eine unsymmetrische Verformung der Dichtlippe des Ventilunterteils und somit Einbussen in der Dichtheitsfunktion zum Fluidblock in vorteilhafter Weise vermieden werden.

In weiterer Ausgestaltung der erfindungsgemäßen Ventilpatrone ist das Ventilunterteil als Kunststoffspritzteil mit einer im Wesentlichen gleich bleibenden Wandstärke ausgeführt. Durch die gleich bleibende Wandstärke im Ventilunterteil können Fehlstellen (Lunker) im spritzgießtechnisch hergestellten Kunststoffbauteil vermieden und Zykluszeiten bei der Herstellung des Ventilunterteils, d.h. Taktzeiten eines Spritzvorganges im Spritzwerkzeug des Ventilunterteils optimiert werden.

In weiterer Ausgestaltung der erfindungsgemäßen Ventilpatrone ist der Ventileinsatz als einteilige geschlitzte Hülse ausgeführt, und der Ventilkörper ist als haubenförmige Hülse ausgeführt, die so in ein zweites Ende des als geschlitzte Hülse ausgeführten Ventileinsatzes eingepresst ist, dass der Hauptventilsitz innerhalb des Ventileinsatzes angeordnet ist. Dadurch können der Ventileinsatz und der Ventilkörper in vorteilhafter Weise durch kostengünstige Verfahren bei konstant bleibender Leistungsfähigkeit der Ventilpatrone hergestellt werden. So kann der als einteilige geschlitzte Hülse ausgeführte Ventileinsatz beispielsweise durch Einrollen eines Blechstreifens hergestellt werden, und der Ventilkörper kann beispielsweise als haubenförmiges Tiefziehteil hergestellt werden.

In weiterer Ausgestaltung der erfindungsgemäßen Ventilpatrone ist die Kapsel als zur Atmosphäre dichtendes Ventilbauteil ausgeführt und über eine Verstemmbuchse an einem Verstemmbereich mit dem Fluidblock verstemmt. Dadurch übernimmt die Kapsel auch die Dichtfunktion ab der Verstemmung der Ventilpatrone im Fluidblock. Da die Kapsel auch die Dichtfunktion nach außen vom Ventileinsatz übernimmt, kann die Ventilmontage in vorteilhafter Weise vereinfacht werden, so dass eine Dichtschweißung zwischen der Kapsel und dem Ventileinsatz nicht mehr erforderlich ist.

Vorteilhafte, nachfolgend beschriebene Ausführungsformen der Erfindung sowie die zu deren besserem Verständnis oben erläuterten, herkömmlichen Ausführungsbeispiele sind in den Zeichnungen dargestellt. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Schnittdarstellung eines herkömmlichen Magnetventils.
Fig. 2 zeigt eine detaillierte Schnittdarstellung eines Abschnittes des herkömmlichen Magnetventils aus Fig. 1.
Fig. 3 zeigt eine schematische Schnittdarstellung eines Ventilunterteils des herkömmlichen Magnetventils aus Fig. 1 oder 2.
Fig. 4 zeigt eine schematische Darstellung einer Ansicht des Ventilunterteils aus Fig. 3 von unten.
Fig. 5 zeigt eine perspektivische Darstellung eines Flachfilters des herkömmlichen Magnetventils aus Fig. 1 oder 2.
Fig. 6 zeigt eine schematische Schnittdarstellung eines Ausführungsbeispiels einer erfindungsgemäßen Ventilpatrone für ein Magnetventil.
Fig. 7 zeigt eine detaillierte Schnittdarstellung eines Abschnittes der erfindungsgemäßen Ventil patrone aus Fig. 6.
Fig. 8 zeigt eine perspektivische Darstellung eines Flachfilters der erfindungsgemäßen Ventilpatrone aus Fig. 6 oder 7.
Fig. 9 zeigt eine schematische Darstellung einer Ansicht des Ventilunterteils aus Fig. 6 oder 7 von unten.
Fig. 10 zeigt eine perspektivische Darstellung des mit dem Ventilunterteil verbundenen Flachfilters, wobei das Ventilunterteil geschnitten dargestellt ist.
Fig. 11 zeigt eine Draufsicht auf den Flachfilter aus Fig. 8.
Fig. 12 zeigt eine Seitenansicht des mit dem Ventilunterteil verbundenen Flachfilters gemäß einem ersten Ausführungsbeispiel.
Figur 13 zeigt eine Schnittdarstellung entlang der Schnittlinie XIII in Fig. 12 mit einem Detailausschnitt.
Fig. 14 zeigt eine Seitenansicht des mit dem Ventilunterteil verbundenen Flachfilters gemäß einem zweiten Ausführungsbeispiel.

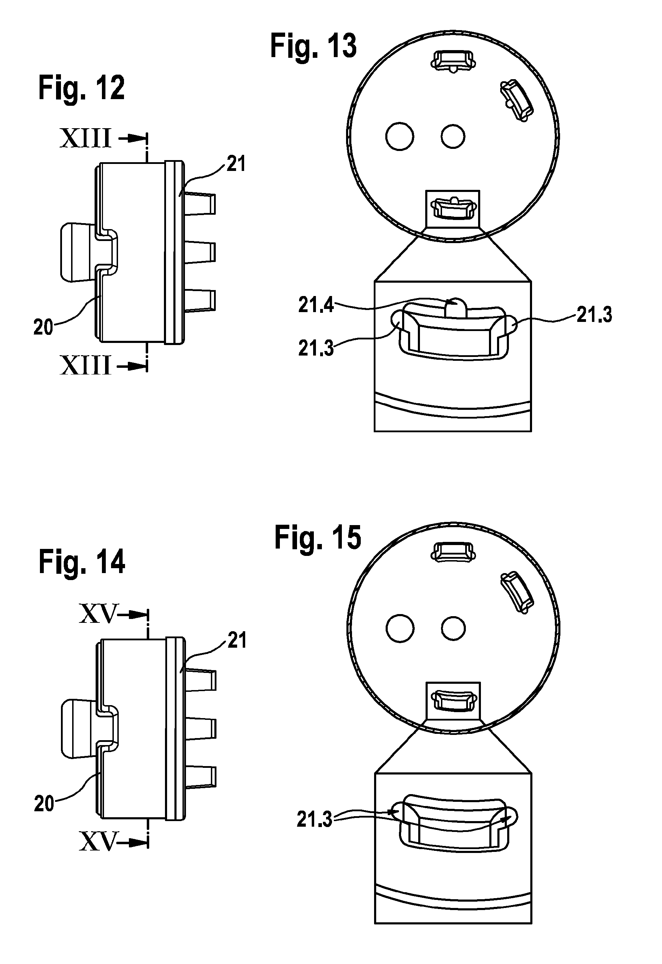

Figur 13 zeigt eine Schnittdarstellung entlang der Schnittlinie XV in Fig. 14 mit einem Detailausschnitt.

### Ausführungsformen der Erfindung

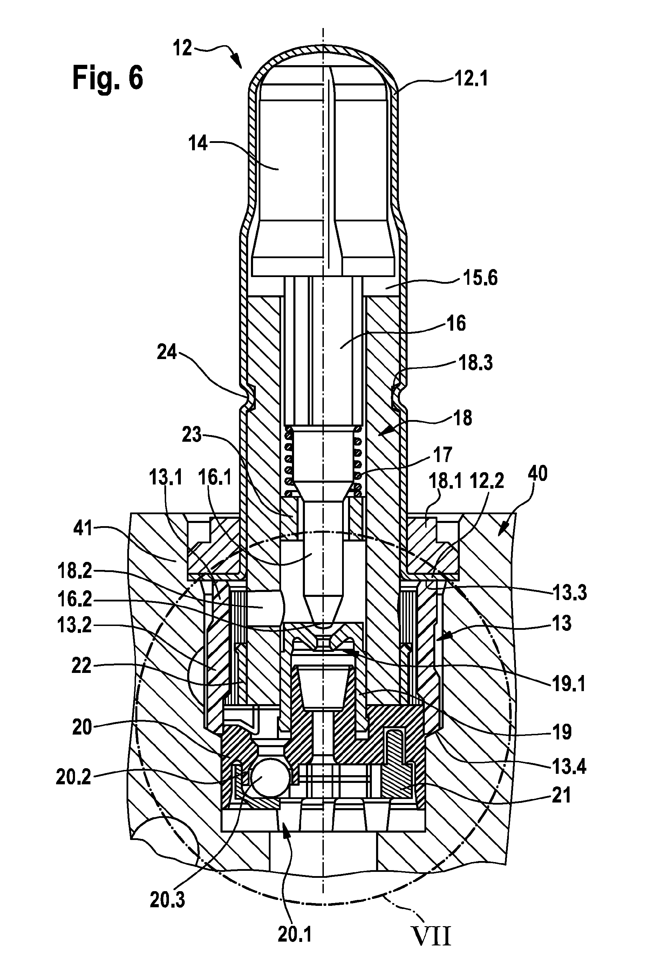

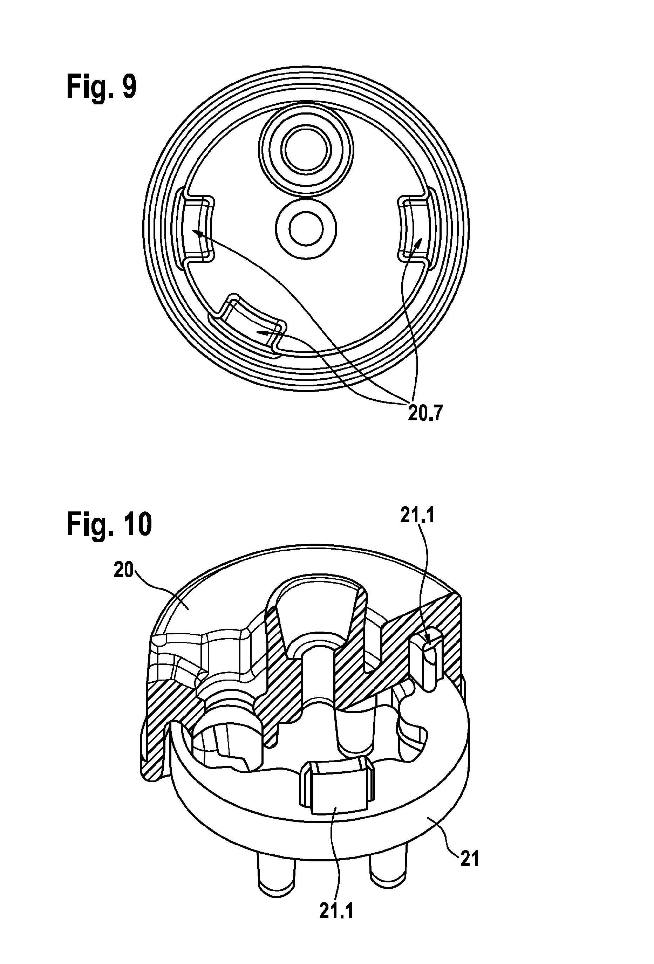

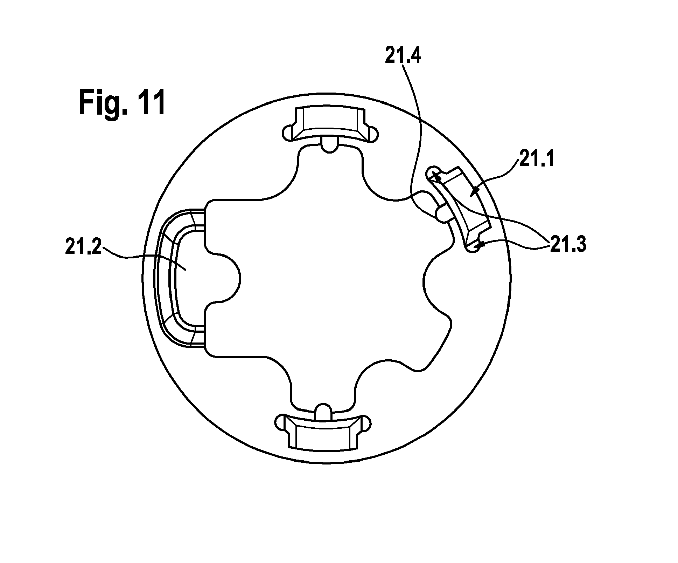

Wie aus Fig. 6 bis 15 ersichtlich ist, umfasst ein Ausführungsbeispiel einer erfindungsgemäßen Ventil patrone 12 für ein Magnetventil eine Kapsel 12.1, einen innerhalb der Kapsel 12.1 beweglich geführten Magnetanker 14, einen Ventileinsatz 18, der mit einem ersten Ende in die Kapsel 12.1 eingeschoben ist, und einen Ventilkörper 19 mit einem Hauptventilsitz 19.1. Innerhalb des Ventileinsatzes 18 ist ein Stößel 16 längsbeweglich geführt, der ein Schließelement 16.1 mit einem Dichtelement 16.2 aufweist, das zur Ausführung einer Dichtfunktion dichtend in den Hauptventilsitz 19.1 des Ventilkörpers 19 eintaucht. Der Stößel 16 kann von dem Magnetanker 14 gegen die Kraft einer Rückstellfeder 17 innerhalb des Ventileinsatzes 18 bewegt werden, wobei der Magnetanker 14 von einer Magnetkraft bewegt wird, die von einer nicht dargestellten Magnetbaugruppe erzeugt wird. Die Magnetbaugruppe kann beispielsweise analog zur Magnetbaugruppe 5 des herkömmlichen Magnetventils 1 gemäß Fig. 1 ausgeführt werden. Wie aus Fig. 6 weiter ersichtlich ist, ist die Kapsel 12.1 als zur Atmosphäre hin dichtendes Ventilbauteil in Richtung Verstemmbereich 41 mit einem Fluidblock 40 verlängert ausgeführt. Daher werden die Verstemmkräfte nicht mehr vom Ventileinsatz 18, sondern von einer Verstemmbuchse 18.1 aufgenommen. Die Verstemmgeometrie wird so weit optimiert, dass ein Verstemmprozess eingeführt werden kann, der eine reduzierte Verstemmkraft zulässt; dadurch können die Verformungskräfte reduziert werden, die auf die Verstemmbuchse 18.1 und die Kapsel 12.1 einwirken.

Wie aus Fig. 6 weiter ersichtlich ist, ist der Ventileinsatz 18 als einteilige geschlitzte Hülse ausgeführt. Der als einteilige geschlitzte Hülse ausgeführte Ventileinsatz 18 kann beispielsweise durch Einrollen eines Blechstreifens hergestellt werden. Im dargestellten Ausführungsbeispiel weist eine Innenbohrung des Ventileinsatzes 18 eine vollkommene oder sehr stark angenäherte Kreisform auf, in welcher der Stößel 16 geführt wird. Zum Ausgleich des Volumens, das der Stößel 16 bei seiner durch den von der Magnetbaugruppe eingeleiteten Magnetfluss bewirkten Axialbewegung verdrängt, und zur Entlüftung bzw. Befüllung, ist in den Stößel 16 mindestens eine axial verlaufende Volumenausgleichsnut eingearbeitet. Alternativ kann die mindestens eine Volumenausgleichsnut jedoch auch in die Innenbohrung des Ventileinsatzes 18 eingearbeitet werden. Bei einer alternativen nicht dargestellten Ausführungsform der erfindungsgemäßen Ventilpatrone kann beispielsweise mindestens eine axial verlaufende Volumenausgleichsnut in den Ventileinsatz 18 eingearbeitet und durch die Form der Innenbohrung des Ventileinsatzes vorgegeben werden.

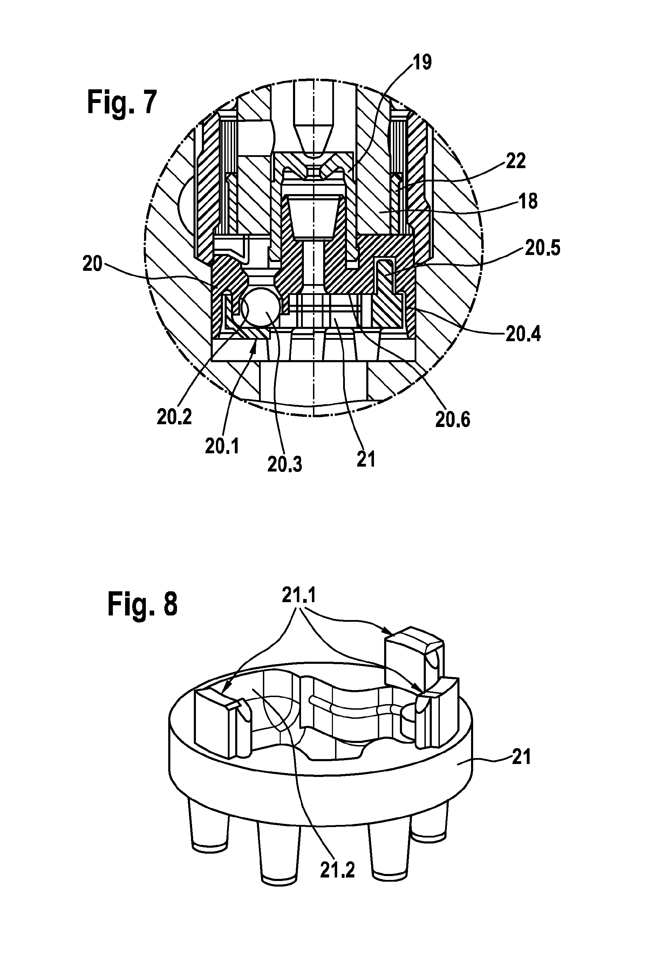

Wie aus Fig. 6 und 7 weiter ersichtlich ist, ist der Ventilkörper 19 als haubenförmige Hülse ausgeführt. Der als Hülse ausgeführte Ventilköper 19 ist beispielsweise als Tiefziehteil ausgeführt und wird über einem Einpressbereich so in ein zweites Ende des als geschlitzte Hülse ausgeführten Ventileinsatzes 18 eingepresst, dass der Hauptventilsitz 19.1 innerhalb des Ventileinsatzes 18 angeordnet ist. Über einen Entkoppelbereich ist der Hauptventilsitz 19.1 im Ventilkörper 19 vom Einpressbereich entkoppelt, um eine Verformung des Hauptventilsitzes 19.1 durch den Einpressvorgang des Ventilkörpers 19 in den Ventileinsatz 18 zu verhindern.

Die hydraulischen Kräfte werden von dem als geschlitzte Hülse ausgeführten Ventileinsatz 18 aufgenommen. Um ein Aufweiten des Ventileinsatzes 18 durch das Einpressen des Ventilkörpers 19 zu verhindern, ist im dargestellten Ausführungsbeispiel ein Armierungsring 22 auf das zweite Ende des Ventileinsatzes 18 aufgepresst. Der aufgepresste Armierungsring 22 vergrößert in vorteilhafter Weise die Gestaltfestigkeit des Ventileinsatzes 18 beim Einpressen des Ventilkörpers 19. Bei einer alternativen nicht dargestellten Ausführungsform der erfindungsgemäßen Ventilpatrone 12 können die Stöße des als geschlitzte Hülse ausführten Ventileinsatzes 18 mindestens am zweiten Ende des Ventileinsatzes 18 miteinander verbunden werden, um die Gestaltfestigkeit des Ventileinsatzes 18 beim Einpressen des Ventilkörpers 19 zu vergrößern. Die Stöße des als geschlitzte Hülse ausführten Ventileinsatzes 18 können beispielsweise durch Schweißen und/oder Kleben und/oder Verzahnen miteinander verbunden werden.

Im dargestellten Ausführungsbeispiel der erfindungsgemäßen Ventilpatrone kann ein maximaler Hub des Stößels 16 durch ein axiales Verschieben des Ventileinsatzes 18 innerhalb der Kapsel 12.1 eingestellt werden. Ein minimaler Luftspalt 15.6 zwischen dem Magnetanker 14 und dem Ventileinsatz 18 kann durch axiales Verschieben des Ventilkörpers 19 innerhalb des Ventileinsatzes 18 mit eingelegtem Anker 14 eingestellt werden. Der eingestellte Luftspalt 15.6 kann durch eine Crimpverbindung 24 zwischen der Kapsel 12.1 und dem Ventileinsatz 18 festgelegt werden, wobei der Ventileinsatz 18 zur Herstellung der Crimpverbindung 24 mit einer umlaufenden Nut 18.3 ausgeführt werden kann. Somit wird durch die Crimpverbindung 24 sichergestellt, dass der Arbeitsluftspalt 15.6 erhalten bleibt, wobei zusätzlich die hydraulisch wirkenden Kräfte aufgenommen werden können. Die Form der umlaufenden Nut 18.3 kann zur Erhöhung der axialen Haltekräfte der Crimpverbindung zwischen Kapsel 12.1 und Ventileinsatz 18 geometrisch verändert und angepasst werden.

Wie aus Fig. 6 weiter ersichtlich ist, ist die Rückstellfeder 17 für den Stößel 16 außerhalb des Strömungsbereichs angeordnet, wobei sich die Rückstellfeder 17 auf einer Federauflage 23 abstützt, die im dargestellten Ausführungsbeispiel als in den Ventileinsatz 18 eingeführte Spannhülse ausgeführt ist. Durch die Verlegung der Rückstellfeder 17 aus dem durchströmten Bauraum können der Verschleiß am Stößel 16 reduziert und der Durchfluss zwischen dem Hauptventilsitz 19.1 und entsprechenden in den Ventileinsatz 18 eingebrachten Radialbohrungen 18.2 erhöht werden.

Wie weiter aus Fig. 6 oder 7 ersichtlich ist, ist ein als Kunststoffeinsatz ausgeführtes Ventilunterteil 20 axial an den Ventileinsatz 18 angelegt und abgestützt, wobei das Ventilunterteil 20 über einen Dom dichtend in einen Innenraum des Ventilkörpers 19 eingeschoben ist und mit der Außenkontur gegen den umgebenden Fluidblock 40 abdichtet. Zudem umfasst das dargestellte Ventilunterteil 20 ein exzentrisch angeordnetes Rückschlagventil 20.1 mit einem Rückschlagventilsitz 20.2 und einem als Kugel ausgeführten Rückschlagventilschließelement 20.3, das eine richtungsorientierte Durchflussfunktion ausführt. Zusätzlich nimmt das Ventilunterteil 20 einen Flachfilter 21 auf. Ein Ringfilter 13 mit Trägerelement 13.1 und Filterelement 13.2 zum Filtern von Schmutzpartikeln ist dichtend an die Ventilpatrone 12 angebunden. Der Ringfilter 13 ist als Kunststoffspritzteil mit einer oberen Dichtstelle 13.3 und einer unteren Dichtstelle 13.4 ausgeführt. Hierbei dichtet die obere Dichtstelle 13.3 einen gefilterten Fluidfluss axial gegen den an die Kapsel 12.1 angeformten Kragen 12.2 ab. Die untere Dichtstelle 13.4 dichtet den gefilterten Fluidfluss axial gegen den Fluidblock 40 ab, in welchem die Ventilpatrone 12 verstemmt ist.

Wie aus Fig. 8 bis 15 ersichtlich ist, entfällt bei den erfindungsgemäßen Haltemitteln zur Verbindung des Flachfilters 21 mit dem Ventilunterteil 20 der bisher im herkömmlichen Ventilunterteil 10 verwendete C-Steg 10.8 und der zur Befestigung verwendete umlaufende Ringsteg 11.1 des herkömmlichen Flachfilters 11. Durch die bauraumoptimierte Umgestaltung des Ventilunterteils 20 und des Flachfilters 21 wird dadurch axialer Bauraum im unteren Magnetventilbereich eingespart. Die dadurch stark verkürzt umlaufende Ringnut im Ventilunterteil 20 wird nicht mehr zur Haltefunktion des Flachfilters 21 genutzt. Die neue erfindungsgemäße Klemmverbindung zwischen dem Flachfilter 21 und dem Ventilunterteil 20 wird im dargestellten Ausführungsbeispiel über drei Haltelaschen 21.1 realisiert, die in drei korrespondierende Nutsegmente 20.7 im Ventilunterteil 20 eintauchen und somit jeweils eine partielle Klemmverbindung 20.5 herstellen. Dabei werden Klemmstege 21.3 an den Haltelaschen 21.1 des Flachfilters 21 in den Nutsegmenten 20.7 des Ventilunterteils 20 radial überpresst. Die Haltelaschen 21.1 können zusätzlich zur richtigen Orientierung des Flachfilters 21 im Ventilunterteil 20 genutzt werden. Neben den Haltelaschen 21.1 weist der Flachfilter 21 eine Aussparung 21.2 für das Rückschlagventil 20.1 auf.

Der wesentliche Vorteil der Erfindung besteht darin, dass durch die bauraumoptimierte Umgestaltung des Ventilunterteils 20 und des Flachfilters 21 eine Kosten sparende Ausführung der Ventilpatrone 12 in Hülsentechnologie ermöglicht wird. Durch die Ausführung der Ventilpatrone 12 in Hülsentechnologie treten designbedingt größere Axialtoleranzen im unteren Magnetventilbereich auf, die konstruktiv unter anderem auch durch das erfindungsgemäße Haltekonzept zwischen dem Flachfilter 21 und dem Ventilunterteil 20 ausgeglichen werden können. Des Weiteren können durch die erfindungsgemäße Ausführung mit den eingebrachten Nutsegmenten 20.7 und den Entfall eines C- Stegs Wandstärkenunterschiede bzw. Materialanhäufungen im Ventilunterteil 20 reduziert werden. Das führt einerseits zu minimierten Schwindungen im Bauteil während des Herstellprozesses was insbesondere für die Dichtfunktion im Rückschlagventil 20.1 vorteilhaft ist und andererseits können festigkeitsreduzierende Fehlstellen (Lunker) im Bauteil minimiert werden. Zudem wird im Ventilunterteil 20 eine umlaufend kontaktfreie Dichtlippe 20.4 realisiert, die einen gleich bleibenden Abstand zum Flachfilter 21 aufweist, der zudem an einer Anlagefläche 20.6 des Ventilunterteils 20 anliegt. Dadurch werden eine unsymmetrische Verformung der Dichtlippe 20.4 und somit Einbussen bei der Dichtheitsfunktion zum Fluidblock 40 vermieden.

In Fig. 12 und 13 ist eine erste Ausführungsform der Haltelaschen 21.1 des Flachfilters 21 dargestellt. Bei der dargestellten ersten Ausführungsform weisen die Haltelaschen 21.1 jeweils drei Klemmstege auf, von denen zwei Klemmstege 21.3 außen liegend und ein Klemmsteg 21.4 innen liegend angeordnet sind.

In Fig. 14 und 15 ist eine zweite Ausführungsform der Haltelaschen 21.1 des Flachfilters 21 dargestellt. Bei der dargestellten zweiten Ausführungsform weisen die Haltelaschen 21.1 jeweils nur die zwei außen liegend angeordneten Klemmstege 21.3 auf.

Durch die erfindungsgemäße Ventilpatrone ist eine verbesserte Verbindung zwischen dem Ventilunterteil und dem Flachfilter möglich, wobei der axiale Bauraum im unteren Magnetventilbereich verringert werden kann. So ist es durch den verringerten axialen Bauraum möglich, die Ventilpatrone in Hülsenbauweise auszuführen, wodurch sich in vorteilhafter Weise eine verringerte Bauhöhe des Magnetventils über dem Fluidblock ergibt, was sich positiv auf das Aggregatboxvolumen auswirken kann. Des Weiteren kann sich auch innerhalb des Fluidblocks eine verringerte Bauhöhe des Magnetventils ergeben, wodurch die Dicke des Fluidblocks verringert werden kann, so dass sich weitere Vorteile im Bezug auf das Gewicht und das Aggregatboxvolumen ergeben können. Außerdem werden durch die erfindungsgemäßen Haltemittel eine unsymmetrische bzw. punktuelle Krafteinleitungen im Bereich der Dichtlippe zur Verbesserung der Dichtfunktion zum Fluidblock vermieden. Des Weiteren können durch die im Wesentlichen gleich bleibenden Wandstärken des Ventilunterteils Fehlstellen (Lunker) im spritzgießtechnisch hergestellten Kunststoffbauteil vermieden und Zykluszeiten während des Spritzvorganges optimiert werden.

## Patentansprüche

1. Ventilpatrone für ein Magnetventil mit einer Kapsel (12.1), einem Ventileinsatz (18), der mit einem ersten Ende in die Kapsel (12.1) eingeschoben ist und der am anderen Ende einen Ventilkörper (19) mit einem Hauptventilsitz (19.1) aufnimmt, und einem Ventilunterteil (20), das sich axial am Ventileinsatz (18) abstützt, **dadurch gekennzeichnet, dass** das Ventilunterteil (20) eine umlaufende Dichtlippe (20.4) aufweist, die einen gleich bleibenden umlaufenden Abstand zu einem geklemmten Flachfilter (21) zum Filtern von Schmutzpartikeln aufweist , und die Verbindung des Flachfilters (21) mit dem Ventilunterteil (20) mittels Haltemitteln ausgebildet ist, wobei die Haltemittel mindestens eine flachfilterseitige Komponente (21.1, 21.3) und mindesten eine korrespondierende ventilunterteilseitige Komponente (20.7) umfassen, welche mindestens eine partielle Klemmverbindung (20.5) zwischen dem Flachfilter (21) und dem Ventilunterteil (20) herstellen.

2. Ventilpatrone nach Anspruch 1, **dadurch gekennzeichnet, dass** die mindestens eine flachfilterseitige Komponente (21.1, 21.3) als Haltelasche ausgeführt ist, und die mindestens eine ventilunterteilseitige Komponente (20.7) als Nutsegment ausgeführt ist, wobei jeweils eine als Haltelasche ausgeführte flachfilterseitige Komponente (21.1, 21.3) in jeweils eine als Nutsegment ausgeführte ventilunterteilseitige Komponente (20.7) eintaucht.

3. Ventilpatrone nach Anspruch 2, **dadurch gekennzeichnet, dass** an die mindestens eine als Haltelasche ausgeführte flachfilterseitige Komponente (21.1, 21.3) mindestens ein Klemmsteg (21.3) angeformt ist, welcher in der korrespondierenden als Nutsegment ausgeführten ventilunterteilseitigen Komponente (20.7) radial überpresst ist .

4. Ventilpatrone nach Anspruch 3, **dadurch gekennzeichnet, dass** an die mindestens eine als Haltelasche ausgeführte flachfilterseitige Komponente (21.1, 21.3) zwei außen liegende Klemmstege (21.3) angeformt sind.

5. Ventilpatrone nach Anspruch 4, **dadurch gekennzeichnet, dass** an die mindestens eine als Haltelasche ausgeführte flachfilterseitige Komponente (21.1, 21.3) ein weiterer innen liegender Klemmsteg (21.3) angeformt ist.

6. Ventilpatrone nach einem der Ansprüche 1 bis 5, **dadurch gekennzeichnet, dass** das Ventilunterteil (20) als Kunststoffspritzteil mit einer im Wesentlichen gleich bleibenden Wandstärke ausgeführt ist.

7. Ventilpatrone nach einem der Ansprüche 1 bis 6, **dadurch gekennzeichnet, dass** der Ventileinsatz (18) als einteilige geschlitzte Hülse ausgeführt ist, und der Ventilkörper (19) als haubenförmige Hülse ausgeführt ist, wobei der als Hülse ausgeführte Ventilköper (19) so in ein zweites Ende des als geschlitzte Hülse ausgeführten Ventileinsatzes (18) eingepresst ist, dass der Hauptventilsitz (19.1) innerhalb des Ventileinsatzes (18) angeordnet ist.

8. Ventilpatrone nach einem der Ansprüche 1 bis 7, **dadurch gekennzeichnet, dass** die Kapsel (12.1) als zur Atmosphäre dichtendes Ventilbauteil ausgeführt und über eine Verstemmbuchse (18.1) an einem Verstemmbereich (41) mit dem Fluidblock (40) verstemmt ist.

9. Magnetventil mit einer Magnetbaugruppe (5) und einer Ventilpatrone (12), wobei innerhalb der Ventilpatrone (12) ein Magnetanker (14) beweglich geführt ist, der von einer von der Magnetbaugruppe (5) erzeugten Magnetkraft bewegbar ist und einen innerhalb des Ventileinsatzes (15) geführten Stößel (16) bewegt, der ein Schließelement (16.1) mit einem Dichtelement (16.2) aufweist, wobei das Dichtelement (16.2) zur Ausführung einer Dichtfunktion dichtend in den Hauptventilsitz (19.1) des Ventilkörpers (19) eintaucht, **dadurch gekennzeichnet, dass** die Ventilpatrone (12) nach einem der Ansprüche 1 bis 8 ausgeführt ist.

## Claims

1. Valve cartridge for a solenoid valve having a capsule (12.1), a valve insert (18) which is pushed with a first end into the capsule (12.1) and which, at the other end, receives a valve body (19) with a main valve seat (19.1), and having a valve bottom part (20) which is supported axially on the valve insert (18), **characterized in that** the valve bottom part (20) has a circumferential sealing lip (20.4) which is at a constant circumferential spacing from a clamped flat filter (21) for filtering dirt particles, and the connection of the flat filter (21) to the valve bottom part (20) is configured by means of retaining means, the retaining means comprising at least one flat filter-side component (21.1, 21.3) and at least one corresponding valve bottom part-side component (20.7) which produce at least a partial clamping connection (20.5) between the flat filter (21) and the valve bottom part (20).

2. Valve cartridge according to Claim 1, **characterized in that** the at least one flat filter-side component (21.1, 21.3) is configured as a retaining bracket, and the at least one valve bottom part-side component (20.7) is configured as a groove segment, in each case one flat filter-side component (21.1, 21.3) which is configured as a retaining bracket dipping into in each case one valve bottom part-side component (20.7) which is configured as a groove segment.

3. Valve cartridge according to Claim 2, **characterized in that** at least one clamping web (21.3) is integrally formed on the at least one flat filter-side component (21.1, 21.3) which is configured as a retaining bracket, which clamping web (21.3) is pressed on radially in the corresponding valve bottom part-side component (20.7) which is configured as a groove segment.

4. Valve cartridge according to Claim 3, **characterized in that** two clamping webs (21.3) which lie on the outside are integrally formed on the at least one flat filter-side component (21.1, 21.3) which is configured as a retaining bracket.

5. Valve cartridge according to Claim 4, **characterized in that** a further clamping web (21.3) which lies on the inside is integrally formed on the at least one flat filter-side component (21.1, 21.3) which is configured as a retaining bracket.

6. Valve cartridge according to one of Claims 1 to 5, **characterized in that** the valve bottom part (20) is configured as a plastic injection-moulded part with a substantially constant wall thickness.

7. Valve cartridge according to one of Claims 1 to 6, **characterized in that** the valve insert (18) is configured as a single-piece slotted sleeve, and the valve body (19) is configured as a hood-shaped sleeve, the valve body (19) which is configured as a sleeve being pressed into a second end of the valve insert (18) which is configured as a slotted sleeve, in such a way that the main valve seat (19.1) is arranged within the valve insert (18).

8. Valve cartridge according to one of Claims 1 to 7, **characterized in that** the capsule (12.1) is configured as a valve component which seals with respect to atmosphere and is caulked to the fluid block (40) in a caulking region (41) via a caulking bush (18.1).

9. Solenoid valve having a magnet module (5) and a valve cartridge (12), a magnet armature (14) being guided movably within the valve cartridge (12), which magnet armature (14) can be moved by a magnetic force which is generated by the magnet module (5), and moves a plunger (16) which is guided within the valve insert (15) and has a closing element (16.1) with a sealing element (16.2), the sealing element (16.2) dipping sealingly into the main valve seat (19.1) of the valve body (19) in order to carry out a sealing function, **characterized in that** the valve cartridge (12) is configured according to one of Claims 1 to 8.

## Revendications

1. Cartouche de vanne pour une électrovanne, comprenant une capsule (12.1), un insert de vanne (18) qui est inséré par une première extrémité dans la capsule (12.1) et qui reçoit à l'autre extrémité un corps de vanne (19) comprenant un siège de vanne principal (19.1), et une partie inférieure de vanne (20) qui s'appuie axialement contre l'insert de vanne (18), **caractérisée en ce que** la partie inférieure de vanne (20) comprend une lèvre d'étanchéité périphérique (20.4) qui présente un écartement périphérique constant par rapport à un filtre plat serré (21) destiné à filtrer des particules d'impuretés, et la liaison du filtre plat (21) à la partie inférieure de vanne (20) est réalisée grâce à des moyens de retenue, les moyens de retenue comportant au moins un composant (21.1, 21.3) situé du côté du filtre plat et au moins un composant (20.7) correspondant situé du côté de la partie inférieure de vanne, lesquels composants réalisent au moins une liaison par serrage partielle (20.5) entre le filtre plat (21) et la partie inférieure de vanne (20).

2. Cartouche de vanne selon la revendication 1, **caractérisée en ce que** l'au moins un composant (21.1, 21.3) situé du côté du filtre plat est réalisé sous forme de patte de retenue, et l'au moins un composant (20.7) situé du côté de la partie inférieure de vanne est réalisé sous forme de segment de rainure, un composant (21.1, 21.3) respectif situé du côté du filtre plat et réalisé sous forme de patte de retenue pénétrant respectivement dans un composant (20.7) situé du côté de la partie inférieure de vanne et réalisé sous forme de segment de rainure.

3. Cartouche de vanne selon la revendication 2, **caractérisée en ce qu'**au moins une nervure de serrage (21.3) est formée sur l'au moins un composant (21.1, 21.3) situé du côté du filtre plat et réalisé sous forme de patte de retenue, laquelle nervure de serrage est surcomprimée radialement dans le composant (20.7) correspondant situé du côté de la partie inférieure de vanne et réalisé sous forme de segment de rainure.

4. Cartouche de vanne selon la revendication 3, **caractérisée en ce que** deux nervures de serrage (21.3) situées à l'extérieur sont formées sur l'au moins un composant (21.1, 21.3) situé du côté du filtre plat et réalisé sous forme de patte de retenue.

5. Cartouche de vanne selon la revendication 4, **caractérisée en ce qu'**une nervure de serrage (21.3) située davantage à l'intérieur est formée sur l'au moins un composant (21.1, 21.3) situé du côté du filtre plat et réalisé sous forme de patte de retenue.

6. Cartouche de vanne selon l'une quelconque des revendications 1 à 5, **caractérisée en ce que** la partie inférieure de vanne (20) est réalisée sous forme de pièce en plastique moulée par injection présentant une épaisseur de paroi essentiellement constante.

7. Cartouche de vanne selon l'une quelconque des revendications 1 à 6, **caractérisée en ce que** l'insert de vanne (18) est réalisé sous forme de douille fendue d'une seule pièce, et le corps de vanne (19) est réalisé sous forme de douille en forme de chapeau, le corps de vanne (19) réalisé sous forme de douille étant enfoncé dans une deuxième extrémité de l'insert de vanne (18) réalisé sous forme de douille fendue de telle sorte que le siège de vanne principal (19.1) soit disposé à l'intérieur de l'insert de vanne (18).

8. Cartouche de vanne selon l'une quelconque des revendications 1 à 7, **caractérisée en ce que** la capsule (12.1) est réalisée sous forme d'élément de vanne réalisant l'étanchéité par rapport à l'atmosphère et est matée sur le bloc fluidique (40) par le biais d'une douille de matage (18.1) au niveau d'une région de matage (41).

9. Électrovanne comprenant un module magnétique (5) et une cartouche de vanne (12), une armature magnétique (14) étant guidée de manière mobile à l'intérieur de la cartouche de vanne (12), laquelle armature magnétique peut être déplacée par une force magnétique générée par le module magnétique (5) et déplace un poussoir (16) guidé à l'intérieur de l'insert de vanne (15), lequel poussoir comprend un élément de fermeture (16.1) pourvu d'un élément d'étanchéité (16.2), l'élément d'étanchéité (16.2) pénétrant de manière étanche dans le siège de vanne principal (19.1) du corps de vanne (19) pour réaliser une fonction d'étanchéité, **caractérisée en ce que** la cartouche de vanne (12) est réalisée selon l'une quelconque des revendications 1 à 8.
